# EUROPEAN PATENT APPLICATION

(11) **EP 4 212 381 A1**
(43) Date of publication of application: **19.07.2023**
(21) Application number: 23151772.3
(22) Date of filing: 16.01.2023
(51) Int. Cl.: B60L 53/30, B60L 53/66

(54) **SYSTEM FOR ELECTRICALLY CHARGING A VEHICLE HAVING A PAYMENT TERMINAL**

(30) Priority: 17.01.2022 IT 202200000632
(71) Applicant: Fortech S.r.l., 47922 Rimini (IT)
(72) Inventor: AVAGLIANO, Piersergio, 47922 RIMINI (IT); BANCI, Massimo, 47922 RIMINI (IT)
(74) Representative: Cutropia, Gianluigi

(57) **Abstract**

An electric charging system (100) for a vehicle comprising a plurality of charging areas (A) situated in the territory; each charging area (A) comprising at least one charging station (P1, P2) and each charging station (P1, P2) comprising at least one charging column (1); the charging columns (1) being connected to the Internet (4), a plurality of payment terminals (2) connected to bank payment circuits (8) to transmit transactions (T) performed by the users and recognize the users by tokenization of bank cards; the payment terminals (2) being connected to the Internet (4), and a central server (5) on a cloud of the Internet (4) configured to receive data from the payment terminals (2) and accordingly send command signals to the charging columns (1) to enable the charge.

## Description

The present invention relates to an electric vehicle charging system.

Recently, electric vehicles of plug-in type have become increasingly popular. Such electric vehicles have an electric connector connected to a battery of the vehicle to power an electric motor of the vehicle.

Charging columns are situated in the territory. The charging column has an electric connector suitable for being coupled with the electric connector of the vehicle to charge the battery of the vehicle.

Therefore, in order to electrically charge the battery of the vehicle, the user goes to a charging column, activates the column to charge the battery of the vehicle, and connects the connector of the column to the connector of the vehicle.

Such an electric charging system of the battery of the vehicle is impaired by some drawbacks due to the management of the payments for the charge made by the user.

Payment systems based on an application program (APP) that can be downloaded to a cellular telephone of the user are known. However, such payment systems of the prior art that are only based on the APP on the cellular telephone are not fully compliant with the Directive 2014/94/EU of the European Parliament and of the Council of October 22, 2014 on the deployment of alternative fuels infrastructure.

Payment systems with bank card are known. However, in such systems, an integration between the bank payment module and the charging column or a remote server of the charging column is always required.

US2020/286077A1 discloses a payment and enforcement system for electric vehicle charging stations, each one of them having one or more charging devices connected to the Internet. The system comprises a user device used by the user and configured to send a token to the charging device. A token processor is suitable for receiving a request from the user device and send the token to the user device. A payment processor receives a piece of information from the token processor about the intention of the customer to use the selected charging device. The payment processor is configured to send a piece of information of "confirmed" or "rejected" type to the token processor according to which the token processor may or may not send the token to the user device. When the payment processor approves the payment, then the token processor sends the token to the user device so that the user can then send the token to the charging device. In order to initiate the token transaction, however, it is necessary to use only the user device. Therefore the system described in US2020/286077A1 is not easy to use and is not versatile as it can be used only by a user in possession of said user device.

US2021/295610A1 discloses an integrated management system for electric vehicle installed in a parking lot provided with one or more charging areas for electric vehicles. US2021/295610A1 does not disclose the payment of the charge by means of the tokenization of a bank card.

The purpose of the present invention is to eliminate the drawbacks of the prior art by providing an electric vehicle charging system that is practical, efficient, reliable, always integrated into the charging column system, and capable of complying with the regulations that are currently in force in Italy and Europe.

Another purpose of the present invention is to provide such an electric vehicle charging system that is versatile and easy to implement and use.

A final purpose of the present invention is to devise an electric vehicle charging system that is easy to use for any user of any age and that can be used by both users in possession of special devices and users not in possession of special devices.

These purposes are achieved in accordance with the invention with the features of the appended independent claim 1.

Advantageous achievements of the invention appear from the dependent claims.

Further features of the invention will appear clearer from the following detailed description, referring to its purely illustrative and therefore not limiting embodiments, illustrated in the appended drawings, wherein:
Fig. 1 is a block diagram illustrating a first embodiment of an electric vehicle charging system according to the invention; and
Fig. 2 is a block diagram illustrating a second embodiment of an electric vehicle charging system according to the invention.

With the aid of the figures, the electric vehicle charging system according to the invention, collectively denoted by the reference numeral 100, is described.

The system (100) comprises a plurality of charging areas (A) situated in the territory.

Each charging area (A) comprises at least one charging station (P1, P2). Each charging station (P1, P2) comprises at least one charging column (1).

The charging column (1) has an electric cable with an electric connector (10) suitable for being coupled with an electric connector of an electric vehicle for charging the battery of the electric vehicle. A charging column can be an upright-shaped device that rises from a base or a device built into a wall.

The system (100) comprises a plurality of payment terminals (2) that are used by the user to pay for the electric charge and are capable of enabling the operation of the charging columns (1).

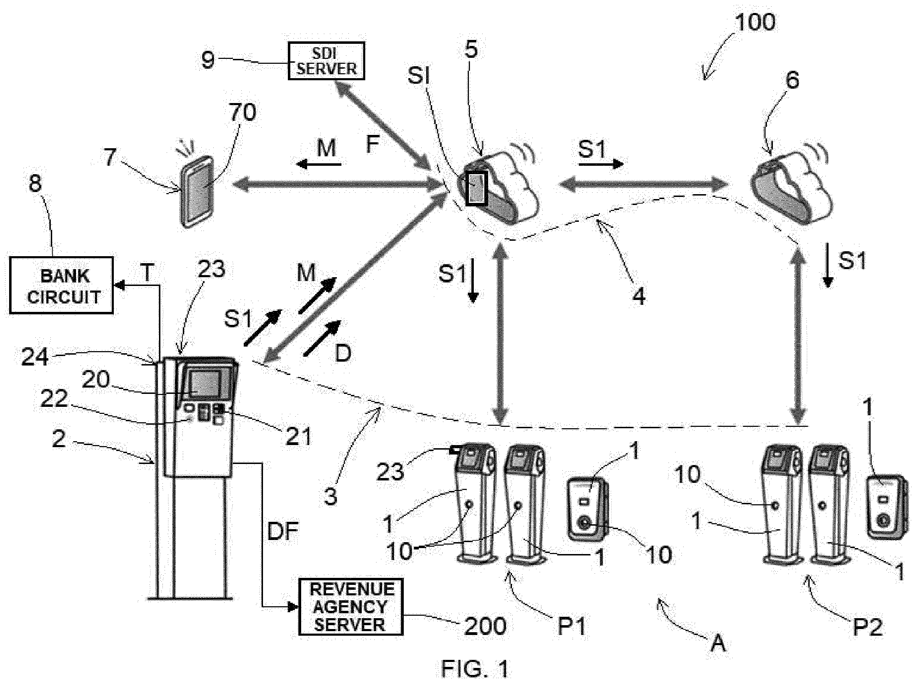

Fig. 1 illustrates a payment terminal (2) of centralized type that operates a plurality of charging columns (1) in the charging area (A).

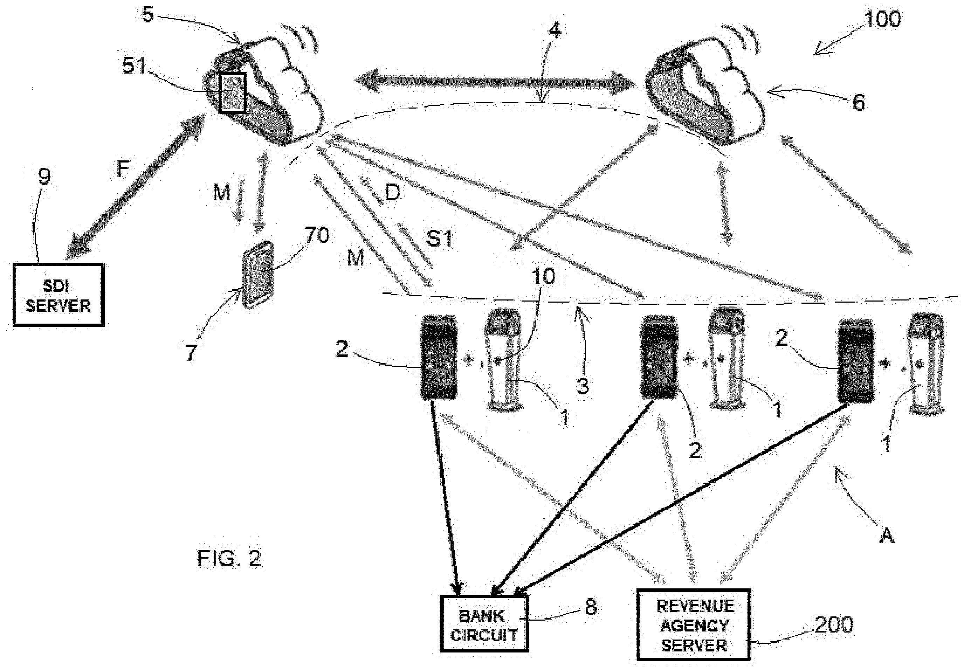

In contrast, Fig. 2 illustrates payment terminals (2) of dedicated type, wherein each payment terminal (2) is integrated into a respective charging column (1).

The payment terminal (2) comprises:
- a control panel (20) that operates as an interface for the user who intends to enable a charging column and pay for the respective charge;
- a card reader (21) enabled to read bank cards; and
- a Near-Field Communication (NFC) reader (22) to read identification codes, for example, stored in a user device (7).

The payment terminal (2) has a mobile telephone communication system (23), e.g., UMTS (Universal Mobile Telecommunications System).

The payment terminal (2) is connected to bank payment circuits (8) via a secure link (24) to transmit the transactions (T) performed by users in the payment terminal.

All the charging columns (1) and the payment terminals (2) provided in a charging area (A) can be connected to an internal local area network (3). The internal local area network (3) is connected to the Internet (4) via ADSL (Asymmetric Digital Subscriber Line). Otherwise, all the charging columns (1) and the payment terminals (2) provided in a charging area (A) can be equipped with a mobile telephone communication system (23), e.g. UMTS (Universal Mobile Telecommunications System).

All the charging columns (1) and the payment terminals (2) provided in a charging area (A) transmit and receive data over the Internet (4) via a VPN (Virtual Private Network) connection.

A central server (5) is installed on a cloud of the Internet (4). The central server (5) manages the charging columns (1) and the payment terminals (2) of all the charging areas (A).

All the payment terminals (2) communicate directly with the central server (5), either via the local area network (3) connected to the Internet (4) or via the mobile telephone communication system (23) via a VPN connection.

Some charging columns (1) (e.g., the charging columns in the charging station (P1) in Fig. 1) can communicate directly with the central server (5) over the Internet (4), via the local area network (3) or the mobile telephone system (23) with a UMTS connection.

In contrast, other charging columns (1) (e.g., the charging columns of the charging station (P2) in Fig. 1) can only communicate with a proprietary server (6) that manages the charging columns. The proprietary server (6) is installed on a cloud on the Internet (4). Thus, the charging columns (1) managed by the proprietary server (6) communicate with the proprietary server (6) via a secure connection. In such a case, the central server (5) is open to the proprietary server (6) and communicates with the proprietary server (6) via an Open Charge Point Interface (OCPI) protocol.

The users may also be provided with a user device (7) (such as a smart device, particularly a cellular phone) capable of connecting to the Internet (4). A payment application program (APP) (70) is installed in the user device (7) to enable a payment of an electric charge. In such a case, after the user via the payment App (70) has selected a charging column (1) with the payment App and enabled a payment of an electric charge, the payment App (70) connects to the central server (5) and sends a payment notification that unlocks the charging column (1) selected by the user.

The provision of the card reader (21) on the payment terminal and the possibility to use the user device (7) with the payment APP (70) allows a user to decide how to pay for the charge. So the system according to the invention is versatile and can be used by any user, whether it is a young user who prefers to use the user device (7) or an elderly user who on the contrary usually prefers to use his/her bank card.

The operation of the system (100) is described below.

The user goes to a charging area (A) to electrically charge his/her vehicle.

The user has to pay for the charge at a payment terminal (2) in order to charge his/her vehicle with the charging column (1) selected by the user.

The payment is made with a bank card, and the payment terminal (2) tokenizes the bank card of the user in an anonymous encrypted form.

The payment terminal (2) sends the token of the bank card and an unlock request (S1) to the central server (5) to unlock the charging column (1) selected by the user.

If the charging column (1) is directly managed by the central server (5), the central server (5) sends the unlock request (S1) directly to the charging column (1) selected by the user.

In contrast, if the charging column (1) is managed by the proprietary server (6), the central server (5) sends the unlock request (S1) to the proprietary server (6) and the proprietary server (6) forwards the unlock request (S1) to the charging column (1) selected by the user.

The charging column (1) receives the unlocking request (S1) from the central server (5) or from the proprietary server (6) via a VPN connection over an ADSL connectivity infrastructure, and makes it possible for the user to charge his/her electric vehicle.

During the charge and/or at the end of the charge, the user can go to the payment terminal (2) and insert the bank card, which is already tokenized with reference to the initial request, into the card reader (21) and terminate the charge by unlocking the vehicle that is being charged. The token of the card allows a unique recognition of the user with reference to the requested charge. Alternatively, the user can use the functions of the vehicle to terminate the charge and disconnect the electric connector of the charging column (1) from the electric connector of the vehicle.

Once the tokenized bank card of the user has been inserted into the card reader (21) of the payment terminal to terminate the charge or the functions of the vehicle have been used to terminate the charge, the payment terminal (2) connects to a bank circuit (8) to proceed with the payment of the transaction (T) related to the specific charge. The payment of the transaction (T) by bank card is made with pre-authorization when the bank card is first inserted into the card reader (21) of the payment terminal and payment notification at the end of the transaction or with payment at the end of the charging service.

Once the payment has been made, as displayed on the control panel (20), the payment terminal (2) prompts the user to enter a telephone number of his/her user device (7), which can be any user device (7) even without the payment App (70). The user enters the telephone number via the control panel (20) of the payment terminal.

Over a secure connection (24), the payment terminal (2) sends an SMS message (M) associated with the telephone number entered by the user to the central server (5). The SMS message (M) contains a link to a billing web page (51) of the central server (5). The central server (5) recognizes the telephone number and sends the SMS message (M) to the user device (7) with the recognized phone number. Using the link contained in the SMS (M) received by his/her user device (7), the user connects to the Internet and to the billing web page (51), where the user can request a virtual receipt or an invoice for the transaction that has just been completed. It should be noted that such an operation can be done with any user device (7) even without the payment App (70).

The billing web page (51) of the central server (5) connects to the payment terminal (2) to retrieve information (D) that allows the virtual receipt to be displayed.

If the user wants an invoice, the billing web page (51) prompts the user to enter the necessary data to issue an electronic invoice. Then the billing web page (51) generates an electronic invoice (F) that is immediately sent to an interchange server (9) on the Internet. The interchange server (9) operates an interchange system (SDI) of electronic invoices, which in Italy is managed by the Italian Revenue Agency.

The payment terminal (2) is considered as a real vending machine. Therefore, all the transactions (T) performed by the payment terminal must be sent to a state agency in charge of controlling the transactions. By way of example, in Italy the state agency in charge is the Internal Revenue Service. In such a case, the state agency has a control server (200) on a cloud on the Internet.

Therefore, the payment terminal (2) is connected to the control server (200) via the local area network (3) and the Internet (4). The payment terminal (2) is configured to send data (DF) related to the billing of each transaction performed through the payment terminal to the control server (200).

Because of the possibility to enable payment methods that allow all the users of electric vehicle to use the charging service, the system (100) according to the invention complies with the implementation discipline of the Directive 2014/94/EU of the European Parliament and of the Council of October 22, 2014 on the deployment of alternative fuels infrastructure.

The central server (5) is an innovative physical system, it being a server machine for field control over the cloud, used to remotely manage a charging area (A).

The bank card tokenization system at the payment terminal (2) and the transmission of the token to the central server (5) are used to manage the unlocking of the charging column (1) and the user recognition

Equivalent variations and modifications may be made to the present embodiments of the invention, within the scope of an expert of the field, which are nevertheless comprised within the scope of the invention as expressed by the appended claims.

## Claims

1. An electric charging system (100) for a vehicle comprising:
- a plurality of charging areas (A) situated in the territory; each charging area (A) comprising at least one charging station (P1, P2) and each charging station (P1, P2) comprising at least one charging column (1) having an electric connector (10) suitable for being coupled with an electric connector of a vehicle connected to a battery of the vehicle; said charging columns (1) being connected to the Internet (4),
- a plurality of payment terminals (2), wherein each payment terminal (2) is suitable for enabling one or more charging columns (1); each payment terminal (2) is connected to bank payment circuits (8) to transmit transactions (T) performed by the users in the payment terminal; said payment terminals (2) being connected to the Internet (4), and
- a central server (5) on a cloud on the Internet (4) configured to receive data from the payment terminals (2) and accordingly send command signals to the charging columns (1) to enable the charge;
wherein the payment terminal (2) is configured to tokenize a bank card of the user and send a token of the bank card and an unlock request (S1) to the central server (5); and the central server (5) is configured to send said unlock request (S1) to a charging column (1) selected by the user to enable a charge in said charging column selected by the user;
wherein said system (100) comprises a user device (7) in which a payment application program (APP) is installed and configured to select a charging column (1) and pay for a charge; said payment application program (APP) being configured to communicate with said central server (5) to send a payment notification to the central server (5) so that the central server can send an unlock request to the charging column selected by the user;
**characterized by** the fact that the payment terminal (2) has a card reader (21) capable of reading bank cards and is configured so that when the bank card of the user is inserted into the card reader (21) at the end of the charge, the payment terminal (2) always recognizes the card token and uniquely identifies the user and the individual charge.

2. The system (100) according to claim 1, wherein the charging columns (1) and the payment terminals (2) provided in a charging area (A) have a mobile telephone communication system (23) or are connected to a local area network (3) connected to the Internet (4).

3. The system (100) according to claim 1 or 2, wherein the charging columns (1) and the payment terminals (2) provided in a charging area (A) are configured to transmit and receive data over the Internet (4) via a Virtual Private Network (VPN) connection.

4. The system (100) according to any one of the preceding claims, wherein said payment terminals (2) comprise at least one centralized payment terminal that operates a plurality of charging columns (1) of the charging area (A).

5. The system (100) according to any one of the preceding claims, wherein said payment terminals (2) comprise at least one dedicated payment terminal, wherein the payment terminal (2) is integrated into a respective charging column (1).

6. The system (100) according to any one of the preceding claims, wherein some of said charging columns (1) are managed by a proprietary server (6) on a cloud on the Internet (4) configured to communicate with and enable some charging columns (1); and said central server (5) being open towards the proprietary server (6) and configured to communicate with the proprietary server (6) via an Open Charge Point Interface (OCPI) protocol.

7. The system (100) according to any one of the preceding claims, wherein the payment terminal (2) is configured in such a way that, after performing a transaction (T), the payment terminal (2) sends an SMS message (M) via the mobile telephone communication system (23) to the central server (5) which forwards said SMS message to a user device (7), wherein said SMS message (M) contains a link to a billing web page (51) of the central server (5) wherein the user can request a virtual receipt or an invoice for the transaction that has just been completed, and the billing web page (51) of the central server (5) is configured to connect to the payment terminal (2) to retrieve information (D) that allows the virtual receipt to be displayed.

8. The system (100) according to claim 7, wherein the billing web page (51) is configured to ask the user to enter the necessary data to issue an electronic invoice, generate an electronic invoice (F), and send the electronic invoice (F) to an interchange server (9) on the Internet that operates an interchange system (SDI) of electronic invoices.

9. The system (100) according to any one of the preceding claims, wherein the payment terminal (2) is configured in such a way to send data (DF) relating to the billing of each transaction performed via the payment terminal to a control server (200) on a cloud on the Internet (4).
